Europäisches Patentamt

European Patent Office

Office européen des brevets

(11) Veröffentlichungsnummer: **0 222 337 B1**

(12) **EUROPÄISCHE PATENTSCHRIFT**

(45) Veröffentlichungstag der Patentschrift: **26.02.92**

(21) Anmeldenummer: **86115443.3**

(22) Anmeldetag: **29.01.86**

(60) Veröffentlichungsnummer der früheren Anmeldung nach Art. 76 EPÜ: **0 192 089**

(51) Int. Cl.⁵: **A01C 17/00**

(54) **Schleuderstreuer, insbesondere für gekörnte Düngemittel.**

(30) Priorität: **06.02.85 DE 3503908**
           **28.03.85 DE 3511240**

(43) Veröffentlichungstag der Anmeldung:
   **20.05.87 Patentblatt  87/21**

(45) Bekanntmachung des Hinweises auf die
   Patenterteilung:
   **26.02.92 Patentblatt  92/09**

(84) Benannte Vertragsstaaten:
   **AT BE CH DE FR GB IT LI LU NL SE**

(56) Entgegenhaltungen:
   **EP-A- 170 605**
   **DE-A- 3 244 058**
   **US-A- 2 594 084**
   **US-A- 4 367 848**

(73) Patentinhaber: **Amazonen-Werke H. Dreyer**
   **GmbH & Co. KG**
   **Postfach 51**
   **W-4507 Hasbergen-Gaste(DE)**

(72) Erfinder: **Dreyer, Heinz, Dipl.-Ing. Univ. Dr.**
   **Am Amazonenwerk 7**
   **W-4507 Hasbergen(DE)**

(74) Vertreter: **Patentanwälte Grünecker, Kinkel-**
   **dey, Stockmair & Partner**
   **Maximilianstrasse 58**
   **W-8000 München 22(DE)**

## Beschreibung

Die Erfindung betrifft einen Schleuderstreuer nach dem Oberbegriff des Anspruchs 1.

Aus der DE-OS 23 44 346 ist ein Düngerstreuer mit einem Zwangsdosiersystem bekannt. Nachteilig ist bei dieser Maschine, daß der Aufgabepunkt des Düngers auf der Schleuderscheibe bei unterschiedlich großen Mengen immer gleich bleibt, so daß die Lage des Streusektors, über den die Düngemittelpartikel von der Schleuderscheibe abgeschleudert werden, sich verändert.

Aus der US-PS 43 67 848 ist ein Schleuderstreuer bekannt, der einen fahrbaren Vorratsbehälter aufweist, dessen Boden als endlos umlaufendes Förderband ausgebildet ist. Am rückwärtigen Ende des Vorratsbehälters ist eine Rutsche angeordnet, die zwei Seitenflügel aufweist, welche einen Trichter bilden. Diese Seitenflügel sind gegeneinander verschwenkbar, um die Größe des Auslaufs des Trichters zu verändern. Das aus der trichterförmigen Rutsche auslaufende Gut gelangt zu einem darunter angeordneten Streukegel, der das Zentrum einer Streuscheibe bildet, die in Drehung versetzt wird. Das Streugut wird einseitig aufgebracht, so daß die Streuscheibe das Gut gegen ein Ablenkblech schleudert, wobei das Ablenkblech das Streugut entsprechend dem Streumuster ablenkt, das durch die Streuscheibe abgestreut wird. Bei dieser Technik wird jedoch der Aufgabepunkt des auszustreuenden Guts auf der Schleuderscheibe nicht in Abhängigkeit von der jeweiligen Menge radial zur Drehachse der Schleuderscheibe verschoben, er bleibt vielmehr unabhängig von der jeweils eingestellten Menge gleich.

Schließlich ist aus der als Stand der Technik im Sinne von Artikel 54 (3) geltenden EP-A-0 170 605 ein Schleuderstreuer bekannt, bei dem zwischen dem Dosiermechanismus und der Schleuderscheibe ein von Hand einstellbares Materialleitelement angeordnet ist. Das Materialleitelement muß für jede Ausbringmenge von Hand gesondert eingestellt werden.

Der Erfindung liegt nun die Aufgabe zugrunde, die eingangs beschriebenen Schleuderstreuer mit dem Zwangsdosiersystem so weiterzubilden, daß bei jeder gewünschten Ausbringmenge ein gleichbleibendes Streuergebnis erzielt wird und gleichzeitig verschiedene Lösungswege aufzuzeigen.

Diese Aufgabe wird erfindungsgemäß durch das Kennzeichen des Anspruches 1 gelöst.

Infolge dieser Maßnahme bleibt die Lage des Streusektors, über den die Materialpartikel abgeschleudert werden, unverändert beibehalten; d.h. die Lage des Streusektors verändert sich nicht. Der sog. Mengeneffekt tritt nicht auf, denn der Aufgabeschwerpunkt wird bei Veränderung der Ausbringmenge entsprechend einer festgelegten Bahn verändert. Bei einer kleinen Ausbringmenge befindet sich der Aufgabeschwerpunkt näher bei der Scheibendrehachse als bei größeren Ausbringmengen. Weiterhin kann es bei einigen Anordnungen von Wurfelementen erforderlich sein, daß das Materialleitelement zusätzlich zu der Verstellung in radialer Richtung auch noch in oder entgegengesetzt der Drehrichtung der Schleuderscheibe verstellt werden muß, bzw. die Verstellung entlängs einer vorgegebenen Kurvenbahn erfolgt.

In einer bevorzugten Ausführung ist vorgesehen, daß die Dosiereinrichtung eine angetriebene Dosierwalze oder ein angetriebenes Dosierband ist, welches über ein Regelgetriebe antreibbar ist, und daß das Materialleitelement mit dem Regelgetriebe gekoppelt ist. Hierdurch wird das Materialleitelement gleichzeitig in einfachster Weise bei Veränderung der Ausbringmenge verstellt. Weiterhin ist vorgesehen, daß die Dosiereinrichtung über ein Variatorgetriebe angetrieben wird, daß die Verstellelemente des Variatorgetriebes und des Materialleitelementes miteinander gekoppelt sind. Somit wird mit wenigen Bauteilen eine einfache und genaue Änderung des Aufgabeschwerpunktes geschaffen. Hierbei ist dann vorgesehen, daß die Verstelleinrichtung des Variatorgetriebes einen Verstellmotor, vorzugsweise einen Elektromotor mit selbsthemmendem Untersetzungsgetriebe, aufweist, welcher über Verstellhebel auf die Scheiben des Variatorgetriebes wirkt, daß an diesem Verstellhebel ein weiterer Hebel angeordnet ist, und daß mit diesem Hebel die Rutsche verbunden ist.

In einer weiteren Ausführung ist erfindungsgemäß vorgesehen, daß die Einstellung der Dosiereinrichtung über eine elektronische Steuer- bzw. Regeleinrichtung steuerbar ist, und daß die Stellung des Materialleitelementes ebenfalls von der elektronischen Steuer- bzw. Regeleinrichtung steuerbar ist, und zwar in Abhängigkeit von der Ausbringmenge. Hierdurch wird ebenfalls eine gleichbleibende Lage des Streusektors erreicht, da der Aufgabeschwerpunkt in Abhängigkeit der Ausbringmenge verändert wird.

Im Folgenden werden Ausführungsbeispiele der Erfindung anhand einer Zeichnung näher beschrieben.

Hierbei zeigen:

Fig. 1 einen erfindungsgemäßen Anbauschleuderstreuer in der Ansicht von hinten und

Fig. 2 einen weiteren erfindungsgemäßen Anbauschleuderstreuer ebenfalls in der Ansicht von hinten.

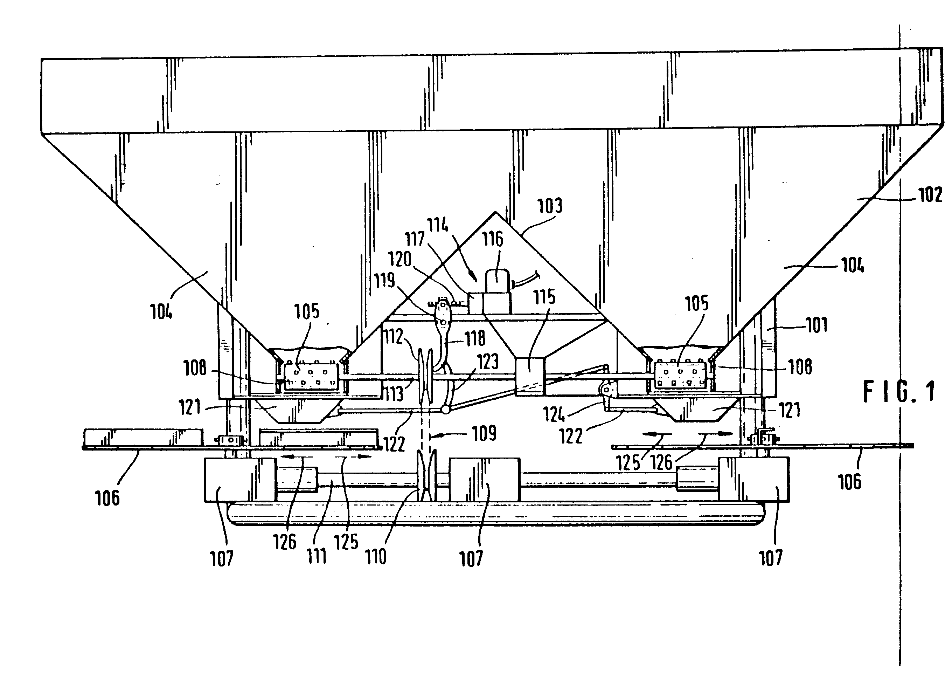

Der als Anbauschleuderstreuer ausgebildete Schleuderstreuer gemäß Fig. 1 weist einen Rahmen 101 auf, der auf seiner Fahrtrichtung gesehen vorderen Seite mit Dreipunktkupplungselementen zum Anbau an einen nicht dargestellten Schlepper ausgestattet ist. Ferner ist an dem Rahmen 101 der Vorratsbehälter 102 befestigt, der zwei durch das dachförmige Mittelteil 103 getrennte trichterförmige Behälterteile 104 aufweist. Die trichterförmigen Behälterteile 104 weisen jeweils die Dosiereinrichtung 105 auf, die die Behälterteile 104 nach unten verschließen. Unter den Dosiereinrichtungen 105 ist jeweils eine als Schleuderscheibe 106 ausgebildete Verteileinrichtung angeordnet. Die Schleuderscheiben 106 werden über das Getriebe 107 von der Zapfwelle des den Anbauschleuderstreuer tragenden Schleppers in einander entgegengesetztem Drehsinn angetrieben.

Die Dosiereinrichtung 105 ist als Zwangsdosierungssystem ausgebildet. Die Dosiereinrichtung 105 besteht im wesentlichen aus der Dosierwalze 108. Jeweils eine Dosierwalze 108 ist in beiden trichterförmigen Behälterteilen 104 angeordnet.
Variatorgetriebe 109 ausgebildeten Regelgetriebe angetrieben. Die Antriebsscheibe 110 des Varitatorgetriebes 109 ist auf der Welle 111 des Getriebes 107 und die Abtriebsscheibe 112 des Variatorgetriebes 119 ist auf der Antriebswelle 113 der Dosierwalzen 108 befestigt. An dem dachförmigen Mittelteil 103 ist die Verstelleinrichtung 114 des Variatorgetriebes 109 angebracht. Weiterhin ist noch das Lagergehäuse 115 für die Antriebswelle 113 der Dosierwalzen 108 unter dem dachförmigen Mittelteil 103 befestigt. Die Verstelleinrichtung 114 des Variatorgetriebes 109 weist den elektrischen Verstellmotor 116 mit dem selbsthemmenden Untersetzungsgetriebe 117 auf. Weiterhin ist an dem dachförmigen Mittelteil 103 der Verstellhebel 118 mit dem Gelenk 119 gelagert. Der Verstellhebel 117 ist mit seiner einen Seite mit der Verstellspindel 120 des Untersetzungsgetriebes 116 verbunden und mit seiner anderen Seite drückt er auf die Abtriebsscheibe 112 des Variatorgetriebes 109. Somit kann über die Verstelleinrichtung 114 der wirksame Durchmesser des Variatorgetriebes 109 variiert werden, so daß sich jeweils entsprechende Drehzahlen der Dosierwalzen 108 und somit die gewünschte Ausbringmenge einstellen lassen.

Zwischen der Dosiereinrichtung 105 und den Schleuderscheiben 106 ist jeweils das als Rutsche 121 ausgebildete Materialleitelement verschiebbar angeordnet. An den Rutschen 121 sind die Verstellhebel 122 angeordnet, die mit dem Verstellhebel 118 der Verstelleinrichtung 114 des Variatorgetriebes 109 gekoppelt sind. Hierzu ist an dem Verstellhebel 118 der Hebel 123 angebracht, der mit den Verstellhebeln 122 gelenkig verbunden ist. Zwischen den Verstellhebeln 122 is noch der Kipphebel 124 als Übersetzungselement angeordnet, so daß die Rutschen 121 entsprechend der gegensinnigen Drehrichtung der Schleuderscheiben ebenfalls gegensinnig verstellt werden.

Die Rutschen 121 sind in nicht dargestellter Weise leicht abnehmbar bzw. wegschwenkbar angeordnet, so daß die auf ihren Antriebswellen auswechselbar angeordneten Schleuderscheiben 106 von ihren Antriebswellen abgenommen und andere Schleuderscheiben auf diesen Antriebswellen angeordnet werden können.

Die Funktion der als Materialleitelement ausgebildeten Rutsche läßt sich folgendermaßen beschreiben:
Durch den elektrischen Verstellmotor 116 der Verstelleinrichtung 114 wird die entsprechende Drehzahl der Dosierwalzen 108 über das Variatorgetriebe 109 für die gewünschte Ausbringmenge Material bei der Normaldrehzahl der Schlepperzapfwelle eingestellt. Das von den Dosierwalzen 108 aus dem Vorratsbehälter 109 dosierte Material wird von den Rutschen 121 auf die Schleuderscheiben 106 geleitet. Die Rutschen 121 bestimmen den Aufgabeschwerpunkt des Materiales auf die Schleuderscheiben 106. Da die Rutschen 121 mit dem Verstellmechanismus 114 des Regelgetriebes 109 gekoppelt sind, werden die Rutschen 121 bei jeder Veränderung der Drehzahl der Dosierwalzen 108 über das Variatorgetriebe 109 in Abhängigkeit der Ausbringmenge automatisch bei Veränderung der Ausbringmenge verstellt. Bei Vergrößerung der Ausbringmenge werden die Rutschen 121 in Pfeilrichtung 125; d.h. in Richtung der Schleuderscheibenaußenkante verstellt, während sie bei Verkleinerung der Ausbringmenge in Pfeilrichtung 126; d.h. in Richtung der Schleuderscheibendrehachse verstellt werden.

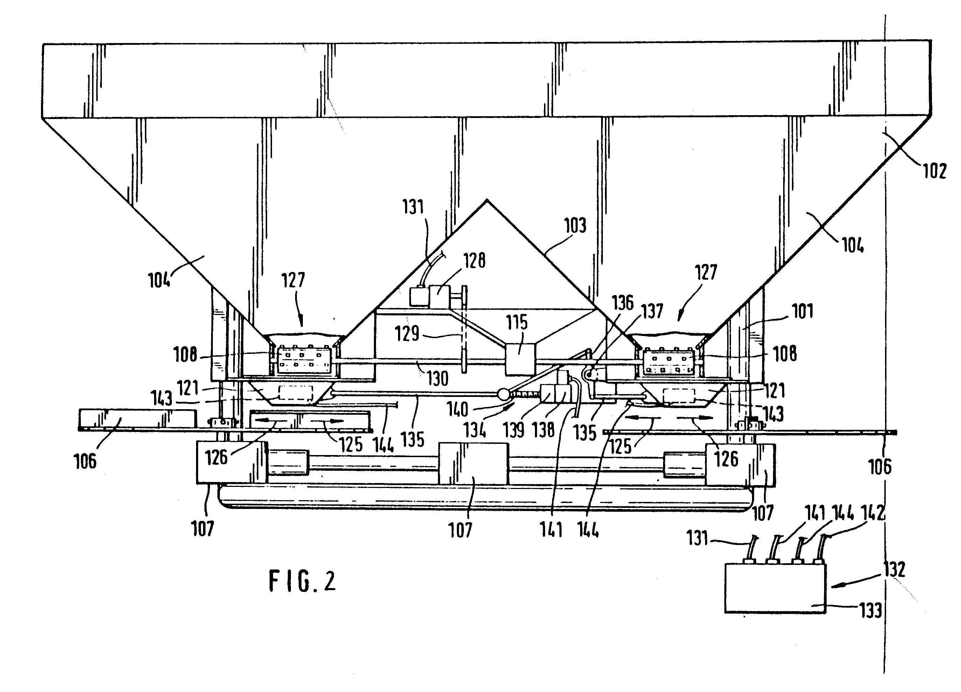

Der Schleuderstreuer gemäß Fig. 2 unterscheidet sich durch einen anderen Antrieb der Dosierwalzen 108 und der Verstellung der Rutschen 121 von dem Schleuderstreuer gemäß Fig. 1. Die Dosiereinrichtung 127 besteht im wesentlichen aus den Dosierwalzen 108 und dem elektrischen Antriebsmotor 128, der die Dosierwalzen 108 antreibt. Der Antriebsmotor 128 ist unter dem dachförmigen Mittelteil 103 angeordnet. Über den Kettentrieb 129 treibt der Antriebsmotor 128 die Dosierwelle 130 der Dosierwalzen 108 an. Die Dosierwelle 130 ist noch zusätzlich in dem Lagergehäuse 115 gelagert.

Der elektrische Antriebsmotor 128 ist über das Kabel 131 mit der elektronischen Steuer- bzw. Regeleinrichtung 132, die in dem Schaltkasten 132 untergebracht ist, verbunden. Über diese Steuer- bzw. Regeleinrichtung 132 wird die Drehzahl der Dosierwalzen 108 entsprechend der gewünschten Ausbringmenge eingestellt. Hierzu erhält der Antriebsmotor 128 über das Kabel 131 entsprechende Impulse, so daß der Antriebsmotor 128 die Dosierwalzen 108 mit der richtigen Drehzahl antreibt. Hierzu kann gegebenenfalls eine nicht dargestellte Drehzahlüberwachungseinrichtung an dem Antriebsmotor 128 oder an den Dosierwalzen 108 angeordnet sein.

An den Rutschen 121 ist die Verstelleinrichtung 134 angeordnet. Diese Verstelleinrichtung weist die Verstellhebel 135 auf, die an den Rutschen 121 angeordnet und über den Kipphebel 136 miteinander verbunden sind. Der Kipphebel 136 ist mit dem Gelenk 137 an dem dachförmigen Mittelteil 103 befestigt. Weiterhin ist an den Verstellhebeln 135 der elektrische Verstellmotor 138 mit dem selbsthemmenden Untersetzungsgetriebe 139, welches die Verstellspindel 140 aufweist, angeordnet. Der elektrische Verstellmotor 128 ist ebenfalls an dem dachförmigen Mittelteil 103 befestigt. Weiterhin ist der elektrische Verstellmotor 138 über das Kabel 141 mit der elektronischen Steuer- bzw. Regeleinrichtung 132 verbunden. In Abhängigkeit der Drehzahl der Dosierwalzen 108 bzw. der Ausbringmenge erhält der Verstellmotor 138 Impulse von der Steuer- bzw. Regeleinrichtung 132, so daß die Rutsche automatisch in Abhängigkeit mit der Ausbringmenge verstellt wird. Bei kleineren Ausbringmengen wird die Rutsche in Pfeilrichtung 126 und bei größeren Ausbringmengen in Pfeilrichtung 125 verstellt, so daß sich der Aufgabeschwerpunkt des Materiales auf den Schleuderscheiben 106 bei großen Ausbringmengen sich näher an der Schleuderscheibenaußenkante als bei kleineren Ausbringmengen befindet.

Die elektronische Steuer- und Regeleinrichtung 132 erhält über das Kabel 142 welches mit einem nicht dargestellten Wegstrecken- bzw. Fahrgeschwindigkeitssensor verbunden ist, Impulse über den zurückgelegten Weg bzw. über die tatsächliche, momentane Fahrgeschwindigkeit, so daß in Abhängigkeit der Fahrgeschwindigkeit die Ausbringmenge verändert werden kann, damit die Ausbringmenge pro Flächeneinheit bei unterschiedlichen Fahrgeschwindigkeiten gleichbleibt.

Weiterhin sind in den Rutschen 121 die Sensoren 143 zur Erfassung der tatsächlichen momentanen Ausbringmenge angeordnet. Diese Sensoren 143 sind über die Kabel 144 ebenfalls mit der Steuer- und Regeleinrichtung 132 verbunden. Die Steuer- und Regeleinrichtung 132 kann so ausgelegt sein, daß aufgrund der von den Sensoren 143 ermittelten Impulse über die tatsächliche Ausbringmenge die Rutschen 121 über die mit der Steuer- und Regeleinrichtung 132 verbundenen Verstelleinrichtung 143 so verstellt werden, daß jeweils in Abhängigkeit der Größe der Ausbringmenge der optimale Aufgabeschwerpunkt des Materiales auf die Schleuderscheiben 106 gewährleistet ist. Somit wird die Rutsche 121, die die Lage des Aufgabeschwerpunktes auf den Schleuderscheiben 106 bestimmt, in Abhängigkeit der Ausbringmenge automatisch bei Veränderung der Ausbringmenge verstellt.

**Patentansprüche**

1. Schleuderstreuer, vorzugsweise Anbauschleuderstreuer, insbesondere für gekörnte Düngemittel, mit einem Vorratsbehälter (102) und einer Verteileinrichtung (106) mit zumindest zwei angetriebenen Verteilorganen, denen die auszubringenden Materialpartikel über eine Zwangsdosiereinrichtung (105, 108, 127) in einstellbaren Mengen zuführbar sind, wobei zwischen der Dosiereinrichtung und der Verteileinrichtung ein in Abhängigkeit von der Ausbringmenge einstellbares und mit einem Verstellelement versehenes Materialleitelement angeordnet ist,
dadurch **gekennzeichnet**,
daß das Materialleitelement (121) mit radialer Komponente zum Verteilorgan verschiebbar ist und daß das Verstellelement (122) mit der Dosiereinrichtung derart gekoppelt ist, daß das Materialleitelement (121) automatisch bei Veränderung der Ausbringmenge verstellbar ist.

2. Schleuderstreuer nach Anspruch 1, **dadurch gekennzeichnet**, daß die Dosiereinrichtung (105, 108) eine angetriebene Dosierwalze (108) oder ein angetriebenes Dosierband ist, welches über ein Regelgetriebe (109) antreibbar ist, und daß das Materialleitelement (121) mit dem Regelgetriebe (109) gekoppelt ist.

3. Schleuderstreuer nach Anspruch 2, **dadurch gekennzeichnet**, daß das Materialleitelement (121) mit dem Verstellmechanismus (114) des Regelgetriebes (109) gekoppelt ist.

4. Schleuderstreuer nach Anspruch 2 oder 3, **dadurch gekennzeichnet**, daß zwischen dem Regelgetriebe (109) und dem Materialleitelement (121) ein Übersetzungselement (124) angebracht ist.

5. Schleuderstreuer nach mindestens einem der Ansprüche 2 bis 4, **dadurch gekennzeichnet**, daß die Dosiereinrichtung (105) über ein Variatorgetriebe (109) angetrieben wird daß die Verstellelemente (118) des Variatorgetriebes (109) und des Materialleitelementes (121) miteinander gekoppelt sind.

6. Schleuderstreuer nach Anspruch 5, **dadurch gekennzeichnet**, daß die Verstelleinrichtung (114) des Variatorgetriebes (109) einen Verstellmotor, vorzugsweise einen Elektromotor (116) mit selbsthemmendem Übersetzungsgetriebe (117) aufweist, welcher über Verstellhebel (118) auf die Scheiben (110, 112) des Variatorgetriebes (109) wirkt, daß an diesem Verstellhebel (118) ein weiterer Hebel (123) angeordnet ist, und daß mit diesem Hebel (123) die Rutsche (121) verbunden ist.

7. Schleuderstreuer nach mindestens einem der Ansprüche 1 bis 6, **dadurch gekennzeichnet**, daß das Materialleitelement als Rutsche (121) ausgebildet ist.

8. Schleuderstreuer nach mindestens einem der Ansprüche 1 bis 7, **dadurch gekennzeichnet**, daß das Materialleitelement (121) abnehmbar angeordnet ist.

9. Schleuderstreuer nach mindestens einem der Ansprüche 1 bis 8, **dadurch gekennzeichnet**, daß das Materialleitelement (121) wegschenkbar angeordnet ist.

10. Schleuderstreuer nach mindestens einem der Ansprüche 1 bis 9, **dadurch gekennzeichnet**, daß die Einstellung der Dosiereinrichtung (17) über eine elektronische Steuer- und/oder Regeleinrichtung (132) steuerbar ist, und daß die Stellung des Materialleitelementes (121) ebenfalls von der elektronischen Steuer- und/oder Regeleinrichtung (132) steuerbar ist, und zwar automatisch in Abhängigkeit der Ausbringmenge.

11. Schleuderstreuer nach mindesrens einem der Ansprüche 7 bis 10, **dadurch gekennzeichnet**, daß die Verstelleinrichtung (134) über eine elektronische Steuer- und/oder Regeleinrichtung (132) Impulse erhält, und daß aufgrund dieser Impulse die Drehzahl der Dosierwalze (108) verändert wird.

12. Schleuderstreuer nach Anspruch 10 oder 11, **dadurch gekennzeichnet**, daß die elektronische Steuer- und/oder Regeleinrichtung (132) mit einem Weg- und/oder Fahrgeschwindigkeitssensor verbunden ist.

13. Schleuderstreuer nach Anspruch 11 oder 12, **dadurch gekennzeichnet**, daß die elektronische Steuer- und/oder Regeleinrichtung (132) mit einem Sensor verbunden ist, der die tatsächliche Ausbringmenge ermittelt.

**Claims**

1. Centrifugal broadcaster, preferably an attachable-type centrifugal broadcaster, more especially for granular fertilizers, including a hopper (102) and a distributor arrangement (106) with at least two driven distributor means, to which the particles of material to be discharged are suppliable in adjustable quantities via a positive metering arrangement (105, 108, 127), a material guiding means being disposed between the metering arrangement and the distributor arrangement, said material guiding means being adjustable in dependence on the discharge quantity and being provided with an adjusting means, characterised in that the material guiding means (121) is displaceable with a radial component relative to the distributor means, and in that the adjusting means (122) is connected to the metering arrangement in such a manner that the material guiding means (121) is automatically adjustable if the discharge quantity is changed.

2. Centrifugal broadcaster according to claim 1, characterised in that the metering arrangement (105, 108) is a driven metering roller (108) or a driven metering belt, which is drivable via a variable speed gear (109), and in that the material guiding means (121) is connected to the variable speed gear (109).

3. Centrifugal broadcaster according to claim 2, characterised in that the material guiding means (121) is connected to the adjusting mechanism (114) of the variable speed gear (109).

4. Centrifugal broadcaster according to claim 2 or 3, characterised in that a transmission means (124) is mounted between the variable speed gear (109) and the material guiding means (121).

5. Centrifugal broadcaster according to at least one of claims 2 to 4, characterised in that the metering arrangement (105) is driven by a variable speed gear (109), [and] in that the adjusting means (118) of the variable speed gear (109) and of the material guiding means (121) are interconnected.

6. Centrifugal broadcaster according to claim 5, characterised in that the adjusting arrangement (114) of the variable speed gear (109) includes an adjusting motor, preferably an electric motor (116) with a self-locking transmission gear (117), which acts on the discs (110, 112) of the variable speed gear (109) via adjusting lever (118), in that an additional lever (123) is disposed on this adjusting lever (118), and in that the chute (121) is connected to this lever (123).

7. Centrifugal broadcaster according to at least one of claims 1 to 6, characterised in that the material guiding means is a chute (121).

8. Centrifugal broadcaster according to at least one of claims 1 to 7, characterised in that the material guiding means (121) is disposed so as to be detachable.

9. Centrifugal broadcaster according to at least one of claims 1 to 8, characterised in that the material guiding means (121) is disposed so as to be capable of pivoting out of the way.

10. Centrifugal broadcaster according to at least one of claims 1 to 9, characterised in that the adjustment of the metering arrangement (17) is controllable by an electronic controlling and/or regulating arrangement (132), and in that the position of the material guiding means (121) is also controllable by the electronic controlling and/or regulating arrangement (132), such control being effected automatically in dependence on the discharge quantity,

11. Centrifugal broadcaster according to at least one of claims 7 to 10, characterised in that the adjusting arrangement (134) receives pulses via an electronic controlling and/or regulating arrangement (132), and in that the speed of the metering roller (108) is changed as a result of these pulses.

12. Centrifugal broadcaster according to claim 10 or 11, characterised in that the electronic controlling and/or regulating arrangement (132) is connected to a track and/or travel speed sensor.

13. Centrifugal broadcaster according to claim 11 or 12, characterised in that the electronic controlling and/or regulating arrangement (132) is connected to a sensor which determines the actual discharge quantity.

**Revendications**

1. Distributeur à disques, de préférence distributeur à disques attelé, en particulier pour engrais sous forme de granulés, avec un réservoir (102) et un dispositif de distribution (106) avec au moins deux organes de distribution entraînés, les particules de matière à répandre pouvant être amenées par un dispositif de dosage forcé (105,108,127) en quantités réglables, dans lequel entre le dispositif de dosage et le dispositif de distribution, est disposé un élément de guidage de la matière réglable en fonction de la quantité de matière à répandre et pourvu d'un élément de déplacement, distributeurs à disque caractérisé en ce que l'élément de guidage de la matière (121) est construit de façon à pouvoir coulisser par ses composantes radiales vers l'organe de distribution et en ce que l'élément de déplacement (122) est accouplé au dispositif de dosage de telle façon que l'élément de guidage (121) des matières soit automatiquement déplaçable lors de la variation de la quantité de matière à répandre.

2. Distributeur à disques selon la revendication 1, caractérisé en ce que le dispositif de dosage (105,108) est un tambour de dosage entraîné (108) ou une bande de dosage entraînée qui peut être entraînée par une transmission de commande (109), et en ce que l'élément de guidage de la matière (121) est accouplé à la transmission de commande (109).

3. Distributeur à disques selon la revendication 2, caractérisé en ce que l'élément de guidage de la matière (121) est couplé avec le mécanisme de déplacement (114) de la transmission de commande (109).

4. Distributeur à disques selon les revendications 2 ou 3, caractérisé en ce que entre la transmission de commande (109) et l'élément de guidage de la matière (121) est disposé un élément de démultiplication (124).

5. Distributeur à disques selon au moins l'une des revendications 2 et 4, caractérisé en ce que le dispositif de dosage (105) est entraîné par un variateur (109), en ce que les éléments de déplacement (118) du variateur (109) et de l'élément de guidage de la matière (121) sont couplés l'un avec l'autre.

6. Distributeur à disques selon la revendication 5, caractérisé en ce que le dispositif de déplacement (114) du variateur (109) présente un servomoteur, de préférence un moteur électrique (116) avec une transmission de démultiplication à blocage automatique (117), qui agit sur les poulies (110,112) du variateur (109) par l'intermédiaire du levier de déplacement (118), en ce que sur ce levier de déplacement (118) est disposé un autre levier (123) et en ce que la goulotte (121) est reliée à ce levier (123).

7. Distributeur à disques selon au moins l'une des revendications 1 à 6, caractérisé en ce que l'élément de guidage de la matière est constitué comme une goulotte (121).

8. Distributeur à disques selon au moins l'une des revendications 1 à 7, caractérisé en ce que l'élément de guidage de la matière (121) peut être enlevé.

9.   Distributeur à disques selon au moins l'une des revendications précédentes, caractérisé en ce que l'élément de guidage de la matière (121) peut être écarté par pivotement.

10.  Distributeur à disques selon au moins l'une des revendications 1 à 9, caractérisé en ce que le positionnement du dispositif de dosage (17) peut être commandé par un dispositif électronique (132) de commande ou de réglage, et en ce que la position de l'élément de guidage de la matière (121) peut être également commandé par le dispositif électronique (132) de commande ou de réglage et ce automatiquement en fonction de la quantité de matière à répandre.

11.  Distributeur à disques selon au moins l'une des revendications 7 à 10, caractérisé en ce que le dispositif de réglage (134) reçoit des impulsions via un dispositif électronique de commande ou de réglage et que du fait de ces impulsions, la vitesse de rotation du tambour de dosage (108) est modifiée.

12.  Distributeur à disques selon l'une des revendications 10 à 11, caractérisé en ce que le dispositif électronique de commande ou de réglage (132) est relié à un détecteur de course et/ou de vitesse d'avancement.

13.  Distributeur à disques selon l'une des revendications 11 à 12, caractérisé en ce que le dispositif électronique de réglage ou de commande (132) est relié à un détecteur, qui capte la quantité effective de matière à répandre.

F I G. 1

FIG. 2